# DEMANDE DE BREVET EUROPEEN

(11) **EP 1 398 896 A1**
(43) Date de publication de la demande: **17.03.2004**
(21) Numéro de dépôt: 03291663.7
(22) Date de dépôt: 04.07.2003
(51) Int. Cl.: H04J 14/02, H04B 10/18

(54) **Peigne de fréquences pour réseau à multiplexage par répartition de fréquences optiques**

(30) Priorité: 12.09.2002 FR 0211307
(71) Demandeur: ALCATEL, 75008 Paris (FR)
(72) Inventeur: Zami, Thierry, 91300 Massey (FR)
(74) Mandataire: Fournier, Michel

(57) **Abrégé**

Pour réduire les effets de phénomènes non linéaires dans les réseaux de transmission optiques WDM, les fréquences optiques porteuses des signaux multiplex appartiennent à un peigne de fréquences spectralement espacées de façon irrégulière, tout en appartenant à une grille de fréquences optiques spectralement espacées de façon régulière selon un pas df.

Ces fréquences sont choisies de sorte qu'elles puissent être extraites des signaux multiplex respectivement par N filtrages optiques périodiques ayant un même intervalle spectral libre (Df) égal à M.df, où M est un entier supérieur ou égal à N, ces filtrages permettant d'extraire N fréquences consécutives de la grille.

De plus, l'écart entre toute paire de fréquences du peigne est différent de tout multiple entier supérieur ou égal à 1 de l'intervalle spectral libre (Df).

## Description

L'invention se situe dans le domaine des réseaux et systèmes de transmission optiques, et plus précisément ceux qui mettent en oeuvre le multiplexage en longueur d'onde, habituellement appelé "WDM" (de l'anglais "Wavelength Division Multiplexing") ou encore "multiplexage par répartition de fréquences optiques".

On rappelle qu'un signal multiplex WDM est formé d'une combinaison de signaux optiques constitués chacun d'une onde porteuse optique modulée en fonction de l'information à émettre. Chaque onde porteuse possède une fréquence optique fi (ou longueur d'onde) spécifique qui permet de définir un canal spectral correspondant.

Afin de rationaliser la réalisation des systèmes optiques WDM en permettant d'utiliser des composants (sources laser, filtres...) produits par divers fabricants, les fréquences optiques porteuses ont fait l'objet de normalisations. Ainsi, l'organisme ITU a défini des grilles standard de fréquences porteuses régulièrement espacées.

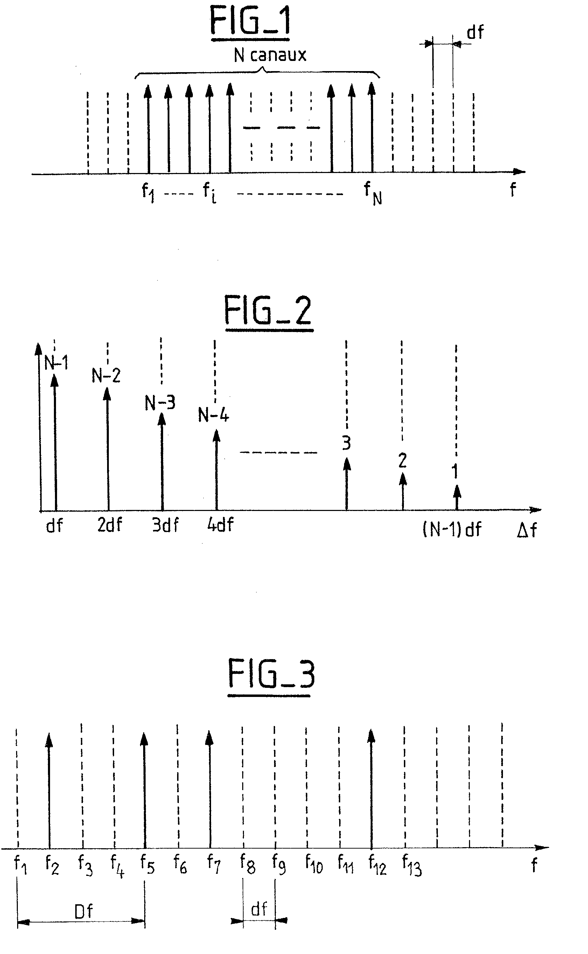

Actuellement, selon la grille considérée, le pas de la grille, c'est-à-dire l'écart df entre les fréquences de deux canaux voisins peut être de 50, 100, 200 ou 400 GHz. La figure 1 illustre une telle grille de fréquences optiques symbolisées par des segments verticaux disposés le long d'un axe des fréquences f.

Pour constituer un multiplex WDM à N canaux, on cherche généralement à minimiser l'encombrement spectral des signaux multiplex véhiculés dans le réseau. Dans ce cas, comme le montre la figure 1, on choisit N fréquences porteuses consécutives f1,..., fi,..., fN (symbolisées par des flèches verticales) d'une des grilles standard (symbolisée par des segments en pointillés verticaux) dont le pas df est assez large pour assurer une séparation spectrale suffisante entre canaux, c'est-à-dire un pas df au moins égale à l'encombrement spectral de chaque canal (qui dépend directement de la fréquence de modulation et de son format).

La transmission des signaux optiques dans les fibres optiques et divers autres équipements des réseaux optiques entraîne des pertes qui imposent en particulier d'introduire des amplifications pour compenser ces pertes. Mais pour réduire le coût des réseaux, on cherche aussi à limiter le nombre d'amplificateurs à installer et pour cela à maximiser les puissances de sortie des amplificateurs. Or, l'augmentation des puissances trouve une limite due à divers phénomènes non linéaires dont sont le siège les fibres et certains composants des réseaux. En particulier, les portes optiques, largement utilisées dans les commutateurs optiques, sont à base d'amplificateurs optiques semiconducteurs, lesquels présentent un comportement fortement non linéaire.

Un phénomène non linéaire spécifique des signaux multiplexés en fréquence optique est le phénomène dit "mélange à quatre ondes" ou "FWM" (de l'anglais "four-waves mixing"). Comme cela est bien connu, ce phénomène peut créer des diaphonies entre canaux lorsque leurs fréquences sont régulièrement espacées.

Ainsi, la constitution d'un multiplex conforme à une grille standard et optimisé du point de vue encombrement spectral, comme exposé ci-dessus, peut ne pas être compatible avec l'augmentation des puissances si le mélange à quatre ondes qui en résulte entraîne des dégradations exagérées des signaux. En particulier, les effets de ce phénomène sont d'autant plus pénalisants que l'espacement spectral entre les canaux est réduit.

Pour éviter ce problème, limiter les puissances ou augmenter l'intervalle spectral entre les canaux conduirait à augmenter le coût et/ou à sous-utiliser la bande passante des réseaux. En effet, à performance égale, si on réduit les puissances de sortie des amplificateurs, il faut alors augmenter le nombre des amplificateurs. D'autre part, compte tenu du fait que la largeur spectrale des multiplex WDM doit toujours être limitée en pratique, au mieux par la bande passante des liaisons et notamment par celle des amplificateurs, si on augmente l'intervalle spectral, on doit diminuer le nombre N de canaux et par conséquent on réduit le débit des informations véhiculées dans le réseau.

Ce problème est abordé dans l'article intitulé "Reduction of Four-wave Mixing Crosstalk in WDM Systems Using Unequally Spaced Channels", Fabrizio Forrghieri et al, IEEE PHOTONICS TECHNOLOGY LETTERS, VOL. 6, NO. 6, juin 1994, pages 754-756. Cet article montre qu'il est possible de trouver des peignes de N fréquences porteuses irrégulièrement réparties sur une grille, telles que toute diaphonie par mélange à quatre ondes soit évitée et telles que l'élargissement spectrale qui en résulte soit minimisé. Une première condition est que l'écart entre les fréquences de toute paire de canaux soit différent de l'écart entre les fréquences de toute autre paire. Ensuite, parmi les peignes satisfaisant à la première condition, on choisit celui dont le spectre présente une largeur totale minimale. Des peignes respectant ces deux conditions peuvent être trouvés comme solutions à un problème de programmation linéaire de type classique.

Bien que cette solution résolve complètement le problème du mélange à quatre ondes, elle ne prend pas en compte les problèmes liés à l'extraction des canaux du multiplex, c'est-à-dire au démultiplexage du signal WDM.

Dans son principe, une opération d'extraction consiste à coupler le signal WDM à l'entrée d'un filtre calé sur la fréquence du canal à extraire. Pour extraire N canaux à la fois, on peut utiliser N filtres séparés couplés chacun au signal WDM. On peut aussi remplacer les filtres par un démultiplexeur conçu pour avoir N sorties calées respectivement sur les N fréquences du multiplex. Pour effectuer une extraction sélective d'un canal quelconque, on peut aussi utiliser un commutateur spatial 1 vers N dont les sorties sont couplées respectivement à N entrées d'un multiplexeur, ces N entrées étant calées respectivement sur les N fréquences du multiplex.

Ces solutions à base de multiplexeurs ou démultiplexeurs sont préférables car elles introduisent moins de pertes que les filtres. Mais elles ne constituent des réalisations économiquement acceptables que dans la mesure où l'on peut utiliser des composants courants du marché, tels que les démultiplexeurs à réseau de guides, encore appelés "phasars" ou AWG (de l'anglais "Arrayed Waveguide Grating"). Or, généralement les démultiplexeurs fabriqués industriellement sont prévus pour sélectionner N fréquences f1,..., fN régulièrement espacées des grilles standard, comme montré sur la figure 1. Avec un tel peigne, on obtient une distribution des valeurs d'écart de fréquences Δf représentée à la figure 2 : l'écart df apparaît N-1 fois, l'écart 2df, N-2 fois, etc.

En adoptant par contre la solution exposée dans l'article précité, on obtient une distribution uniforme des valeurs d'écart de fréquences, mais qui nécessite en général pour l'extraction des canaux des démultiplexeurs spécifiques ou de très grande dimension. Par ailleurs les N fréquences s'étendent sur une largeur spectrale accrue.

L'invention a pour but de remédier à ces inconvénients en proposant pour la constitution de multiplex un type de peignes de fréquences optiques porteuses ayant la propriété de limiter les effets du mélange à quatre ondes, tout en permettant d'extraire les canaux conformes à ces peignes au moyen de démultiplexeurs simples et peu coûteux.

Dans ce but, l'invention propose un compromis consistant à choisir parmi les fréquences d'une grille de type standard des fréquences non régulièrement espacées, mais sans chercher à résoudre complètement le problème du mélange à quatre ondes. Par contre, les fréquences seront choisies de façon à pouvoir exploiter la propriété de périodicité des fonctions de filtrage optique que présentent les démultiplexeurs et multiplexeurs usuels.

Plus précisément, l'invention a pour objet un peigne de fréquences optiques d'ondes porteuses attribuées respectivement à N canaux spectraux constituant un signal multiplex optique, lesdites fréquences du peigne étant spectralement espacées de façon irrégulière, tout en appartenant à une grille de fréquences optiques spectralement espacées de façon régulière selon un pas df, caractérisé en ce que lesdites fréquences du peigne sont choisies de sorte qu'elles puissent être extraites dudit signal multiplex respectivement par N filtrages optiques périodiques ayant un même intervalle spectral libre égal à M.df, où M est un entier supérieur ou égal à N, lesdits filtrages permettant d'extraire N fréquences consécutives de la grille, et en ce que l'écart entre toute paire de fréquences dudit peigne est différent de tout multiple entier supérieur ou égal à 1 dudit intervalle spectral libre.

En choisissant N fréquences porteuses répondant à ces critères pour constituer un multiplex, l'extraction des canaux peut être effectuée au moyen d'un unique démultiplexeur régulier classique à une entrée et N sorties, tels qu'un démultiplexeur à réseau de guides.

En effet, un démultiplexeur de ce type a la propriété que la transmittance par rapport à l'entrée de chacune de ses N sorties présente un même intervalle spectral libre. Il est donc équivalent à N filtres optiques périodiques présentant ce même intervalle spectral libre. Pour extraire les N fréquences selon l'invention, on choisira alors un démultiplexeur ayant N sorties calées sur N fréquences consécutives de la grille et présentant l'intervalle spectral libre Df selon l'invention, c'est-à-dire égal à M.df, où M est un multiple entier nécessairement supérieur ou égal à N. Cette dernière condition assure que le démultiplexeur peut séparer spatialement N fréquences consécutives de la grille. Et comme en outre les N fréquences porteuses selon l'invention sont telles que l'écart entre deux quelconques d'entre elles est différent de tout multiple entier supérieur ou égal à 1 de l'intervalle spectral libre Df, le démultiplexeur peut également séparer spatialement ces N fréquences porteuses.

Avantageusement, les valeurs d'écart entre paires de fréquences du peigne ne sont pas toutes distinctes. Ainsi, l'espacement irrégulier des fréquences de canal sur la grille conduit à limiter les conséquences du mélange à quatre onde, mais le fait d'accepter que l'écart entre les fréquences de certaines paires de canaux puisse être égal à l'écart entre les fréquences d'autres paires de canaux n'assure pas une parfaite immunité à ce phénomène. En contrepartie, cela permet de trouver davantage de peignes répondant aux critères selon l'invention et en particulier des peignes dont la largeur spectrale est moindre que dans le cas des peignes composés d'un même nombre de canaux et parfaitement insensibles au mélange à quatre onde.

Il convient toutefois de rechercher un compromis optimal en pratique entre le degré d'insensibilité au mélange à quatre onde et la largeur spectrale. Pour cela, par des simulations de transmissions dans des milieux non linéaires classiques, on peut évaluer l'importance des effets du mélange à quatre onde en fonction de la distribution des valeurs des écarts entre les fréquences des peignes répondant aux critères précédents. En fixant une limite à ces effets, on peut alors en déduire une condition supplémentaire à imposer aux fréquences du peigne.

Ainsi, selon une autre caractéristique avantageuse de l'invention, il a été établi que les fréquences du peigne doivent de préférence être choisies de sorte les écarts entre paires de ces fréquences ne prennent pas une même valeur plus de 5N/9 fois.

Selon une autre caractéristique de l'invention, on prendra M = N. Cette dernière condition a pour effet de permettre de trouver des peignes ayant une largeur spectrale minimale pour des valeurs données de df et de N. Cela implique aussi que le démultiplexeur mentionné ci-dessus qui sera adapté pour l'extraction des canaux est un démultiplexeur cyclique. Les démultiplexeurs de ce type étant également des composants usuels, cette condition est donc sans conséquences quant au coût de mise en oeuvre de l'extraction des canaux.

L'invention a aussi pour objet un signal multiplex optique constitué de N canaux spectraux auxquels sont attribuées respectivement N fréquences optiques d'ondes porteuses appartenant à un peigne tel que défini ci-dessus.

L'invention porte également sur un réseau de transmission optique utilisant le multiplexage par répartition de fréquences optiques pour véhiculer au moins un signal multiplex optique constitué de N canaux spectraux auxquels sont attribuées respectivement N fréquences optiques d'ondes porteuses appartenant à un peigne tel que défini ci-dessus.

Avantageusement, on prévoira dans un tel réseau que plusieurs signaux multiplex soient associés respectivement à plusieurs peignes différents entre eux. Cette dernière disposition est intéressante pour limiter les problèmes de diaphonie entre canaux dans les routeurs optiques où des sélecteurs de fréquence reçoivent plusieurs signaux multiplex.

D'autres aspects et avantages de l'invention apparaîtront dans la suite de la description en référence aux figures.
- La figure 1 représente une grille de fréquences optiques déjà commentée précédemment.
- La figure 2 représente la distribution des valeurs d'écart de fréquence d'un peigne de fréquences optiques classique.
- La figure 3 représente un exemple de peigne de fréquences optiques selon l'invention.
- La figure 4 représente un élément de routeur optique pour un réseau WDM selon l'invention.

La figure 3 montre un exemple de peigne de fréquences optiques selon l'invention dans le cas particulier où N = 4.

La grille de fréquences optiques a un pas df et comporte les fréquences f1, f2, ..., f13, ... symbolisées par des segments verticaux disposés le long d'un axe des fréquences f. Pour constituer le peigne, les quatre fréquences choisies sont f2, f5, f7, f12, symbolisées par des flèches verticales.

Ce peigne a été constitué de façon à pouvoir définir un intervalle spectral libre Df égal à 4df, en respectant la condition que l'écart entre toute paire de fréquences du peigne soit différent de tout multiple entier supérieur ou égal à 1 de l'intervalle spectral libre 4df.

Selon cet exemple, les fréquences du peigne sont choisies de sorte qu'elles puissent être extraites d'un signal multiplex au moyen d'un démultiplexeur cyclique ayant quatre sorties calées sur quatre fréquences consécutives de la grille et présentant l'intervalle spectral libre 4df.

Pour d'autres valeurs de N, il est toujours possible de trouver des valeurs de fréquences et un intervalle spectral libre Df qui permettent de respecter les conditions selon l'invention. Pour trouver facilement ces valeurs, on pourra utiliser des méthodes courantes de programmation linéaire.

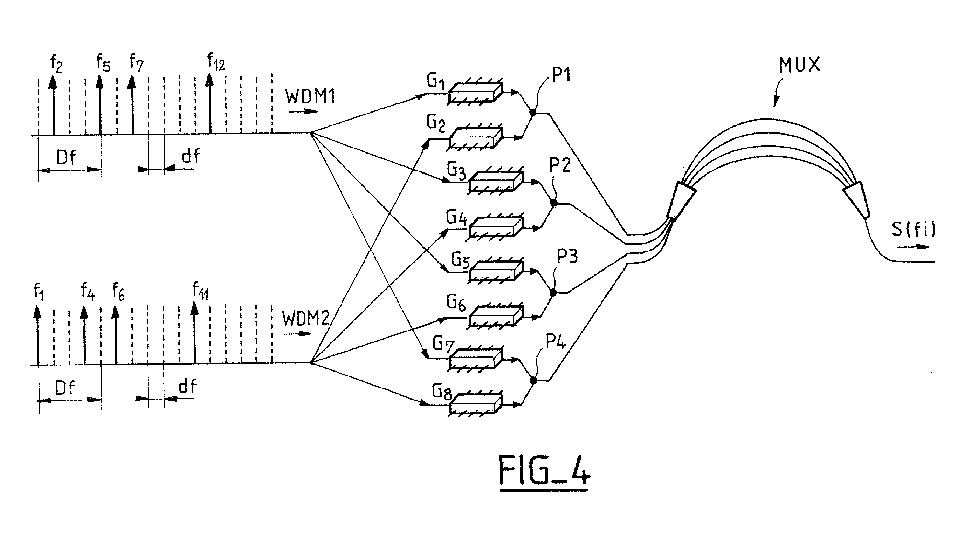

La figure 4 permet d'illustrer comment les peignes et multiplex selon l'invention peuvent être exploités dans un réseau de transmission optique utilisant le multiplexage par répartition de fréquences optiques et adapté à ces peignes.

Le dispositif représenté a pour fonction d'extraire sélectivement l'un quelconque des canaux S(fi) appartenant à l'un quelconque des deux signaux multiplex WDM1, WDM2 reçus.

Selon cet exemple, chaque signal multiplex comporte 4 canaux spectraux auxquels sont attribuées respectivement 4 fréquences optiques d'ondes porteuses appartenant à un peigne selon l'invention. Ainsi, le peigne du multiplex WDM1 est constitué des fréquences f2, f5, f7 et f12, et le peigne du multiplex WDM2 est constitué des fréquences f1, f4, f6 et f11.

Le dispositif comporte un multiplexeur périodique MUX, tel qu'un multiplexeurs à réseau de guides "AWG", qui est muni de 4 entrées P1 à P4 calées respectivement sur les 4 fréquences f1, f2, f3 et f4, avec un intervalle spectral libre Df choisi égal à 4df. Il s'agit donc d'un multiplexeur périodique cyclique dont les 4 entrées sont calées respectivement sur les 4 fréquences f1, f2, f3 et f4 modulo 4df .

Les 4 entrées sont disposées chacune pour recevoir par l'intermédiaire de portes optiques G1-G8 une partie de chacun des signaux multiplex WDM1, WDM2. Ainsi, pour extraire l'un quelconque des canaux S(fi) appartenant à l'un quelconque des deux signaux multiplex WDM1, WDM2, il suffit d'activer un des portes optiques. Selon l'exemple, les portes G1 à G8 permettent d'extraire respectivement les fréquences f5, f1, f2, f6, f7, f11, f12, f4.

On remarque qu'un même multiplexeur périodique peut servir à extraire des multiplex associés à des peignes selon l'invention qui sont différents. Avec un dispositif du type de celui de la figure 4 notamment, le fait de choisir des peignes différents présente l'avantage de réduire au niveau des entrées du multiplexeur les risques de diaphonies dues à l'isolation imparfaite des portes optiques.

Le dispositif sélecteur de fréquence de la figure 4 peut aisément être généralisé pour des peignes selon l'invention comportant un nombre N quelconque de fréquences et pour un nombre quelconque de signaux multiplex d'entrée.

Ce dispositif pourra constituer un élément de base pour réaliser un routeur optique ou une matrice de commutation photonique WDM. Il suffit pour cela de prévoir pour chaque sortie de la matrice plusieurs de ces dispositifs et de coupler leurs sorties à la sortie associée de la matrice.

## Revendications

1. Peigne de fréquences optiques d'ondes porteuses attribuées respectivement à N canaux spectraux constituant un signal multiplex optique, lesdites fréquences du peigne étant spectralement espacées de façon irrégulière, tout en appartenant à une grille de fréquences optiques spectralement espacées de façon régulière selon un pas df, **caractérisé en ce que** lesdites fréquences du peigne sont choisies de sorte qu'elles puissent être extraites dudit signal multiplex respectivement par N filtrages optiques périodiques ayant un même intervalle spectral libre (Df) égal à M.df, où M est un entier supérieur ou égal à N, lesdits filtrages permettant d'extraire N fréquences consécutives de la grille, et **en ce que** l'écart entre toute paire de fréquences dudit peigne est différent de tout multiple entier supérieur ou égal à 1 dudit intervalle spectral libre (Df).

2. Peigne selon la revendication 1, **caractérisé en ce que** les valeurs d'écart entre paires de fréquences dudit peigne ne sont pas toutes distinctes.

3. Peigne selon la revendication 2, **caractérisé en ce que** les écarts entre paires de fréquences dudit peigne ne prennent pas une même valeur plus de 5N/9 fois.

4. Peigne selon l'une des revendications 1 à 3, **caractérisé en ce que** M = N.

5. Signal multiplex optique constitué de N canaux spectraux auxquels sont attribuées respectivement N fréquences optiques d'ondes porteuses spectralement espacées de façon irrégulière, tout en appartenant à une grille de fréquences optiques spectralement espacées de façon régulière selon un pas df, **caractérisé en ce que** lesdites N fréquences optiques d'ondes porteuses appartiennent à un peigne dont les fréquences sont choisies de sorte qu'elles puissent être extraites dudit signal multiplex respectivement par N filtrages optiques périodiques ayant un même intervalle spectral libre (Df) égal à M.df, où M est un entier supérieur ou égal à N, lesdits filtrages permettant d'extraire N fréquences consécutives de la grille, et **en ce que** l'écart entre toute paire de fréquences dudit peigne est différent de tout multiple entier supérieur ou égal à 1 dudit intervalle spectral libre (Df).

6. Signal multiplex selon la revendication 5, **caractérisé en ce que** les valeurs d'écart entre paires de fréquences dudit peigne ne sont pas toutes distinctes.

7. Signal multiplex selon la revendication 6, **caractérisé en ce que** les écarts entre paires de fréquences dudit peigne ne prennent pas une même valeur plus de 5N/9 fois.

8. Signal multiplex selon l'une des revendications 5 à 7, **caractérisé en ce que** M = N.

9. Réseau de transmission optique utilisant le multiplexage par répartition de fréquences optiques pour véhiculer au moins un signal multiplex optique (WDM1, WDM2) constitué de N canaux spectraux auxquels sont attribuées respectivement N fréquences optiques d'ondes porteuses, **caractérisé en ce que** lesdites N fréquences optiques d'ondes porteuses appartiennent à un peigne selon l'une des revendications 1 à 4.

10. Réseau de transmission optique selon la revendication 9, **caractérisé en ce qu'**au moins deux desdits signaux multiplex (WDM1, WDM2) sont associés respectivement à au moins deux desdits peignes, ces peignes étant différents entre eux.
